Europäisches Patentamt

European Patent Office

Office européen des brevets

(19)

(11) Publication number: **0 052 639**
**B1**

(12) **EUROPEAN PATENT SPECIFICATION**

(45) Date of publication of patent specification: **11.12.85**

(51) Int. Cl.⁴: **B 60 G 9/02**

(21) Application number: **81901548.8**

(22) Date of filing: **27.05.81**

(86) International application number:
**PCT/FI81/00039**

(87) International publication number:
**WO 81/03466 10.12.81 Gazette 81/29**

(54) **AXLE CONSTRUCTION FOR VEHICLE.**

(30) Priority: **29.05.80 FI 801747**

(43) Date of publication of application:
**02.06.82 Bulletin 82/22**

(45) Publication of the grant of the patent:
**11.12.85 Bulletin 85/50**

(84) Designated Contracting States:
**FR GB SE**

(56) References cited:
**CH-A- 471 697**
**DE-A-2 401 242**
**DE-C- 329 809**
**DE-C- 659 669**
**DE-C- 829 556**
**SE-B- 379 969**
**US-A-2 417 019**
**US-A-2 531 621**
**US-A-2 978 254**

(73) Proprietor: **Valmet Oy**
**Punanotkonkatu 2**
**SF-00130 Helsinki 13 (FI)**

(72) Inventor: **TOIVOLA, Alpo**
**Väliaitankatu 5 A 3**
**SF-40300 Jyväskylä 30 (FI)**

(74) Representative: **Rostovanyi, Peter et al**
**AWAPATENT AB Box 5117**
**S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to an axle construction for a vehicle, especially for an off-the-road vehicle or tractor, comprising a rigid, centrally pivoted oscillating axle suspended in relation to the frame of the vehicle at its central part.

In off-the-road vehicles and tractors it is common to use a rigid oscillating axle, centrally directly pivoted to the frame of the vehicle without any suspension. One of the disadvantages of this axle construction is poor driving comfort which makes the said axle construction unsuitable for high speeds. Previously known is also a rigid oscillating axle directly mounted with bearings to the frame and comprising a suspension in its shoulder axles. This axle construction is however not suited for driving wheels and the construction becomes complicated and expensive.

Concerning the patent literature related to this invention, reference is made to US patents 1.120.036 and 3.572.748. In the former US patent an axle construction is disclosed in which the front axle of the vehicle is fixed in a yielding way to the frame of the vehicle. This axle construction comprises interposed members parallel to the axle of the vehicle and associated at both ends with leaf springs by means of which the oscillating centrally pivoted axle is fixed in a yielding way to other structures of the vehicle.

In the US patent no. 3.572.748 a suspended axle system construction of the steerable wheels of a vehicle is disclosed, consisting of a telescopic construction having a rectangular cross-section. This telescopic construction comprises a lower part to which the axle of the vehicle is fixed in a centrally pivoting way, an upper part fixed to the frame of the vehicle, and a helical spring assembly disposed between the mentioned parts. As a disadvantage of both of the afore-mentioned constructions may be regarded the fact that all the loads of the oscillating axle, also horizontal loads, are conveyed to the frame of the vehicle by means of the spring assembly, and thus the spring assembly or assemblies must be so constructed as to permit loads with a horizontal constituent also, which leads to a heavy construction of the spring assembly and prevents the planning of the spring assembly entirely with regard to optimal suspension characteristics.

It is an object of the present invention to create a simple and cheap axle construction so that same axles can be used as in previously known solutions where direct fixing through bearings to the frame has been used. An object is to create tractors or off-the-road vehicles with better driving comfort than in unsuspended ones. It is an object to improve by means of suspension and shock-absorbing the driving characteristics of tractors and other off-the-road vehicles especially at higher driving speeds. An additional object of the invention is to create such an axle construction of the type in question in which the above-discussed disadvantages of the solutions disclosed in the said US patents are avoided.

In order to achieve the objects mentioned above and becoming apparent later, this invention relating to an axle construction for a vehicle, in particular an off-the-road vehicle or a tractor, said construction comprising a rigid, centrally mounted oscillating axle suspended from the frame of the vehicle by means of an auxiliary frame and a spring means, wherein the rigid oscillating axle is connected, by means of bearings located at the centre of the axle, to the rigid auxiliary frame so as to oscillate in relation to the auxiliary frame, and wherein the rigid auxiliary frame is fixed at one end to the frame of the vehicle by means of fulcrum pins transverse of the direction of travel of the vehicle, in such a manner that the movement of the auxiliary frame in relation to the vehicle frame is only a vertical rocking movement, is characterised in that the spring means is a single central spring disposed between the frame of the vehicle and the free end of the rigid auxiliary frame so as to dampen the rocking movement of the auxiliary frame in relation to the frame of the vehicle.

US—A—2,417,019, it is true, discloses a construction wherein an auxiliary frame (5, 8) is pivotally mounted at one end on the frame (1, 2) of the vehicle, but this mounting is effected by means of a torsion rod (11, 12). Thus, the auxiliary frame is not rigid. The auxiliary frame (5, 8) can rock also in the vertical plane transverse of the vehicle since the arms (14, 15) are movable independently of each other because of the torsion rods (11, 12).

On the other hand, DE—C—829 556 discloses a construction according to the preamble of claim 1, wherein two springs (g1) are disposed between the rigid axle (c1) and the frame (a) of the vehicle.

The construction according to the present invention makes it possible to advantageously use components of unsuspended oscillating axle structures, per se known in the art, to which only one auxiliary frame and one spring need to added to accomplish the structure of the invention.

In the following the invention is described in detail by referring to an embodiment of the invention shown in the attached figures, to the details of which the invention is however not restricted.

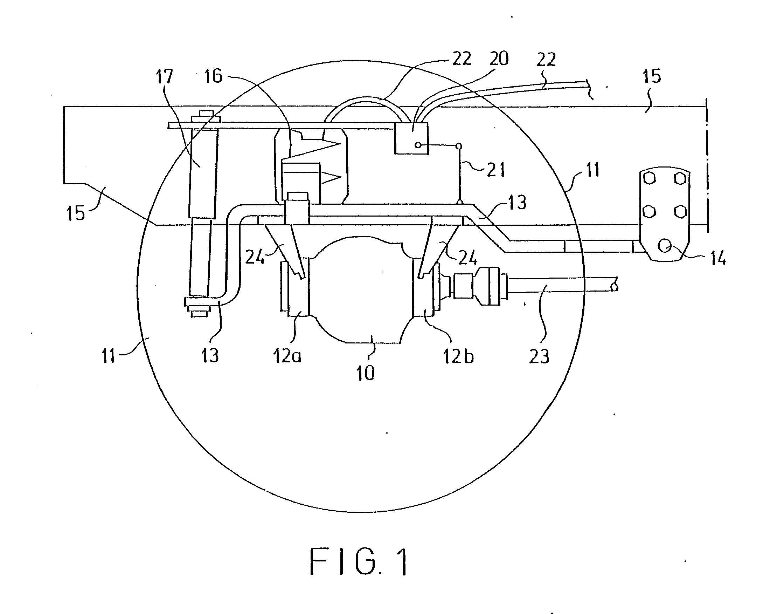

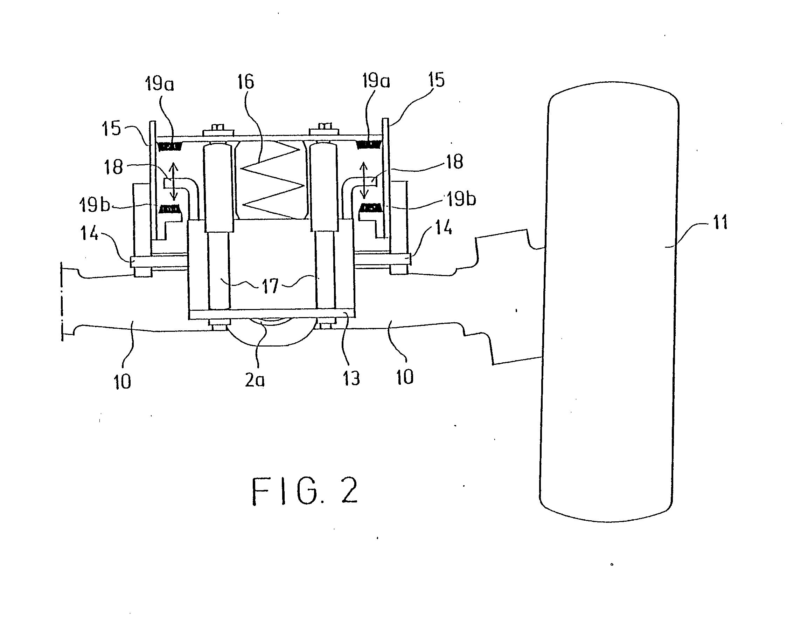

Fig. 1 shows a side elevation of an axle construction according to the invention. Fig. 2 shows a front elevation of the same as Fig. 1.

According to Figs. 1 and 2 the axle construction has a rigid oscillating axle 10 which in this case is steerable and has driving wheels 11. The axle 10 is in the previously known way centrally pivoted through the axle bearings 12a and 12b, longitudinally disposed in relation to the vehicle and fixed to the auxiliary frame 13. The auxiliary frame 13 in turn is pivoted at its one end by means of transverse fulcrum pins 14 to the frame 15 of the vehicle. Between the free end of the auxiliary frame 13 and the frame 15 a spring 16 is disposed which in the embodiment shown by the figures is pneumatic. Between the auxiliary frame 13 and the frame 15, as such previously known shock-absorbers 17 may further be disposed.

The movement of the auxiliary frame 13 is restrained by means of restraining members 18 in the auxiliary frame and rubber cushions 19a and 19b in the frame 15.

The pressure of the pneumatic spring 16 and thus the space to move between the auxiliary frame 13 and the frame 15 of the vehicle is regulated by means of the height adjustment valve 20 placed in the frame 15. By means of the lever system 21 the said valve 20 communicates with the auxiliary frame 13. Thus automatic height adjustment of the frame 15 and also manual height adjustment are possible. Compressed air is led from a compressor through hoses 22 to the pneumatic spring 16.

The oscillating axle shown in the figures is also a driving axle and in Fig. 1 is shown a power transmission shaft 23. In Fig. 1 can also be seen the vertical members 24 by means of which the axle bearings 12a and 12b have been connected to the auxiliary frame 13.

According to a preferred embodiment of the invention the auxiliary frame 13 is disposed under the power transmission shaft 23 and in this way the auxiliary frame itself forms or can advantageously have attached thereto a bottom armour which is an essential element in some off-the-road vehicles.

In the figures a compressed-air spring is shown as the spring assembly 16, but also other types of springs can be used within the invention. Thus leaf springs, helical springs, torsion bar springs, rubber springs or other corresponding springs and combinations of different spring types can be used as the spring assembly 16.

According to Fig. 1, power is transmitted to the driving axle 10 by means of a cardan shaft 23 through the axle bearing 12b. If the joint of the cardan shaft is disposed vertically below the fulcrum pins 14 of the auxiliary frame 13, no axial space to move is required in the cardan shaft.

In Figs. 1 and 2 only one axle 10 of the two axles of the vehicle has been shown, in this embodiment being provided with both steerable and driving wheels. As the other axle, for example a bogie axle can be used.

## Claims

1. An axle construction for a vehicle, in particular an off-the-road vehicle or a tractor, said construction comprising a rigid, centrally mounted oscillating axle (10) suspended from the frame (15) of the vehicle by means of an auxiliary frame (13) and a spring means (16), and wherein said rigid oscillating axle (10) is connected, by means of bearings (12a, 12b) located at the centre of the axle, to the rigid auxiliary frame (13) so as to oscillate in relation to the auxiliary frame, and wherein the rigid auxiliary frame (13) is fixed at one end to the frame (15) of the vehicle by means of fulcrum pins (14) transverse of the direction of travel of the vehicle, in such a manner that the movement of the auxiliary frame in relation to the vehicle frame is only a vertical rocking movement, characterised in that the spring means (16) is a single central spring disposed between the frame (15) of the vehicle and the free end of the rigid auxiliary frame (13) so as to dampen the rocking movement of the auxiliary frame in relation to the frame of the vehicle.

2. Axle construction as claimed in claim 1, characterised in that the spring (16) is a per se known pneumatic spring, the pressure of which is adjustable manually and/or by an automatic valve (20) to which means (21) sensing the distance between the vehicle frame (15) and the auxiliary frame (13) are connected.

3. Axle construction as claimed in claim 1 or 2, characterised in that the auxiliary frame (13) is disposed underneath the axle (10), the auxiliary frame itself forming a bottom armour or a bottom armour being attachable to the auxiliary frame.

## Revendications

1. Construction d'essieu pour véhicule, en particulier pour véhicule non routier ou pour tracteur, cette construction comprenant un essieu rigide (10) monté oscillant en son centre, suspendu au châssis (15) du véhicule à l'aide d'un châssis auxiliaire (13) et d'un moyen élastique (16), dans laquelle ledit essieu rigide oscillant (10) est réuni, par des paliers (12a, 12b) situés au centre dudit essieu, au châssis auxiliaire rigide (13) de manière à osciller en relation avec ce dernier, et dans laquelle le châssis rigide auxiliaire (13) est fixé par une extrémité au châssis (15) du véhicule à l'aide de broches de pivotement (14) transversales à la direction de déplacement du véhicule, de telle manière que le mouvement du châssis auxiliaire par rapport au châssis du véhicule est seulement un mouvement de balancement vertical, caractérisée en ce que le moyen élastique (16) est un unique ressort central disposé entre le châssis (15) du véhicule et l'extrémité libre du châssis auxiliaire rigide (13) de manière à amortir le mouvement de balancement du châssis auxiliaire par rapport au châssis du véhicule.

2. Construction d'essieu selon la revendication 1 caractérisée en ce que le ressort (16) est un ressort pneumatique connu en soi dont la pression est réglable manuellement et/ou par une valve automatique (20) à laquelle est raccordé un moyen (21) de détection de la distance entre le châssis (15) du véhicule et le châssis auxiliaire (13).

3. Construction d'essieu selon la revendication 2 caractérisée en ce que le châssis auxiliaire (13) est disposé en dessous de l'essieu (10), ce châssis auxiliaire constituant par lui-même une cuirasse de fond ou une cuirasse de fond étant attachable à ce châssis auxiliaire.

## Patentansprüche

1. Achsenkonstruktion für ein Fahrzeug, insbesondere ein Geländefahrzeug oder einen Schlepper, umfassend eine starre, in der Mitte gelagerte Schwingungsachse (10), die mittels eines Hilfsrahmens (13) und eines Federgliedes (16) am Fahrzeugrahmen (15) aufgehängt ist, wobei diese starre Schwingungsachse (10) mittels in der Mitte der Achse angebrachter Lager (12a, 12b) derart mit dem starren Hilfsrahmen (13) verbunden ist, dass sie im Verhältnis zum Hilfsrahmen schwingt, und wobei der starre Hilfsrahmen (13) am einen Ende mit Hilfe von zur Fahrtrichtung des Fahrzeugs quergestellten Gelenkzapfen (14) derart am Rahmen (15) befestigt ist, dass die Bewegung des Hilfsrahmens im Verhältnis zum Fahrzeugrahmen nur eine senkrechte Schwingungsbewegung ist, dadurch gekennzeichnet, dass das Federglied (16) eine einzige, zentrische Feder ist, die derart zwischen dem Fahrzeugrahmen (15) und dem freien Ende des starren Hilfsrahmens (13) angeordnet ist, dass sie die Schwingungsbewegung des Hilfsrahmens im Verhältnis zum Fahrzeugrahmen dämpft.

2. Achsenkonstruktion nach Anspruch 1, dadurch gekennzeichnet, dass die Feder (16) eine an sich bekannte pneumatische Feder ist, deren Druck von Hand und/oder mit Hilfe von einem automatischen Ventil (20) einregelbar ist, an das Glieder (21) angeschlossen sind, die den Abstand zwischen dem Fahrzeugrahmen (15) und dem Hilfsrahmen (13) abfühlen.

3. Achsenkonstruktion nach Anspruch 1 oder 2, dadurch gekennzeichnet, dass der Hilfsrahmen (13) unterhalb der Achse (10) vorgesehen ist, wobei der Hilfsrahmen selbst eine Bodenpanzerung bildet, oder eine Bodenpanzerung am Hilfsrahmen befestigbar ist.

FIG. 1

0 052 639

FIG. 2